# FASCICULE DE BREVET EUROPEEN

(11) **EP 0 562 933 B1**
(45) Date de publication et mention de la délivrance du brevet: **14.08.1996**
(21) Numéro de dépôt: 93400724.6
(22) Date de dépôt: 22.03.1993
(51) Int. Cl.: B29C 45/34, B29C 45/26, G02B 6/38

(54) **Dispositif de moulage comportant des moyens d'éventage, pour le moulage de viroles de connecteurs de fibres optiques**
Formvorrichtung mit Entlüftungsmitteln zum Formen von Steckerstiften für optische Faserstecker
Moulding apparatus with vent means for moulding ferrules for optical fiber connectors

(30) Priorité: 24.03.1992 FR 9203524
(43) Date de publication de la demande: 29.09.1993
(73) Titulaire: FRAMATOME CONNECTORS INTERNATIONAL, 92084 Paris La Défense (FR)
(72) Inventeur: Lalaouna, Said, F-72400 La Ferte Bernard (FR); Ollivier, Jean-Francois, F-22230 Merdrignac (FR); Penha, Manuel, F-72100 Le Mans (FR)
(74) Mandataire: Keib, Gérard

(56) Documents cités:
- EP-A- 0 311 550
- FR-A- 1 394 552
- US-A- 4 874 308
- PATENT ABSTRACTS OF JAPAN vol. 10, no. 83 (M-466)(2140) 2 Avril 1986;& JP A 60 224516 (HITACHI KASEI KOGYO).
- PATENT ABSTRACTS OF JAPAN vol. 10, no. 7 (P-419)(2064) 11 Janvier 1986;& JP A 60 164711 (FUJIKURA DENSEN).

## Description

L'invention concerne le moulage des viroles en matière plastique pour connecteurs de fibres optiques.à la différence des viroles en matériau céramique, qu'il est possible d'usiner avec une très grande précision mais dont le coût est élevé, les viroles en matière en plastique, beaucoup moins coûteuses, présentent souvent une médiocre précision dimensionnelle.

En effet, les techniques classiques de moulage des pièces en matière plastique (qu'il s'agisse de matériaux thermoplastiques ou thermodurcissables) permettent rarement d'atteindre les précisions nécessaires : typiquement, une virole est une pièce cylindrique de 12 mm de long avec un diamètre extérieur de 2500 µm et un alésage axial de diamètre 126 µm ; ces deux diamètres doivent être obtenus avec une précision de {0, +1 µm} et un défaut de concentricité d'au plus 0,7 µm entre diamètre extérieur et diamètre intérieur.Le moule comporte à cet effet une empreinte creuse cylindrique ou 〈〈canon de précision〉〉 soigneusement usinée, recevant une broche axiale portant à son extrémité une aiguille calibrée de 126 µm {0, -1 µm} de diamètre. Ces deux pièces (canon et aiguille) peuvent être réalisées avec une très grande précision, mais il demeure la difficulté d'obtenir une concentricité meilleure que 0,7 µm entre elles deux. Cette concentricité est d'autant plus difficile à obtenir que, compte tenu des contraintes de moulage, la broche portant l'aiguille est reliée à l'empreinte inférieure du moule et qu'il n'est donc pas possible de solidariser aiguille et canon, ces deux éléments devant pouvoir être séparés à chaque cycle de moulage.

Pour remédier à cette difficulté, il a été proposé d'utiliser une contre-pièce ou 〈〈pièce de repilotage〉〉 dont le diamètre extérieur est monté serré dans le canon de précision et porte un alésage de 127 µm de diamètre recevant et positionnant donc avec précision l'aiguille calibrée lors de la fermeture du moule et pendant la phase d'injection de la matière plastique (fonction de guidage).

Toutefois, cette contre-pièce a pour inconvénient de venir empêcher, pendant l'injection, l'évacuation des gaz contenus dans la cavité de moulage (fonction d'éventage), évacuation qui, compte tenu des contraintes de moulage des viroles de -précision, ne peut avoir lieu par le plan de joint du moule comme à l'accoutumée. Par ailleurs, le jeu entre l'aiguille de 126 µm et l'alésage de 127 µm de la contre-pièce est tout à fait insuffisant pour servir d'évent, car la perte de charge serait bien trop importante dans un tel interstice, compte tenu notamment du fait que les gaz résiduels doivent être évacués en un laps de temps très faible, l'injection de la matière plastique ne durant que quelques secondes (parfois même moins de deux secondes).

Les techniques de ce type proposées jusqu'à présent ne donnent pas, comme on l'exposera plus loin, de solution qui soit satisfaisante à la fois sur le plan de l'éventage et sur celui du guidage. On s'est jusqu'à présent heurté à un dilemne entre, d'une part, des jeux importants ou des chaînes de cotes complexes qui entraînent une perte de la précision de guidage et, d'autre part, de faibles jeux qui empêchent un éventage convenable.

Le but de l'invention est de proposer une géométrie de contre-pièce qui satisfasse à la fois les exigences des fonctions de guidage et d'éventage et permette d'obtenir la concentricité recherchée entre diamètre intérieur et diamètre extérieur des viroles moulées.

Cette contre-pièce fait partie d'un dispositif du type précité, comportant plus précisément : une empreinte formant cavité de moule, comprenant un canon de moulage cylindrique calibré définissant le diamètre extérieur de la virole à mouler, et une empreinte inférieure fermant cette cavité de moule ; une broche, reliée à cette empreinte inférieure, s'étendant axialement dans la cavité et prolongée à son extrémité libre par une aiguille calibrée définissant le diamètre intérieur de la virole à mouler ; une contre-pièce, s'étendant axialement dans la cavité en vis-à-vis de la broche, cette contre-pièce comportant un alésage de guidage de l'aiguille recevant l'extrémité de celle-ci, de manière à assurer alors la concentricité entre aiguille et canon ; et des moyens d'éventage, permettant l'échappement des gaz présents dans la cavité de moule vers l'extérieur lors de l'injection de la matière plastique.

Selon un premier aspect de l'invention, les moyens d'éventage sont formés par une pluralité de régions de la contre-pièce se succédant en direction axiale, comprenant : une région cylindrique courte d'éventage, dont le diamètre laisse subsister entre contre-pièce et canon un jeu formant évent périphérique continu en communication avec la cavité de moulage ; et une région cylindrique longue de guidage, dont le diamètre nominal procure avec le canon un ajustement sans jeu présentant un serrage minimal, cette pièce étant pourvue d'évents longitudinaux discrets s'étendant le long de génératrices de cette région cylindrique longue.

Selon un mode de réalisation préféré, une gorge formant chambre de tranquillisation peut être située entre la région cylindrique courte d'éventage et la région cylindrique longue de guidage.

Selon un second aspect de l'invention, la contre-pièce est une pièce essentiellement cylindrique de révolution montée directement dans le canon de moulage de la cavité de moulage avec un ajustement sans jeu présentant un serrage minimal. Dans ce cas, le diamètre intérieur du canon est de préférence défini à {0, -1 µm} et le diamètre extérieur de la contre-pièce est défini à {+1 µm, 0} pour un diamètre nominal de 2500 µm, la contre-pièce étant avantageusement en un matériau céramique usiné.

Très avantageusement, la face frontale de la contre-pièce est conformée en gabarit, de manière à donner à la face homologue de la virole une forme finale prédéterminée, directement venue de moulage.

L'invention vise également, en tant que produit nouveau, une virole pour connecteurs de fibres optiques, caractérisée par une face frontale non usinée présentant une forme prédéterminée directement obtenue par moulage au moyen d'un dispositif présentant cette dernière caractéristique.

On va maintenant décrire plus en détail l'invention, en référence aux dessins annexés.

La figure 1 représente schématiquement, en coupe, un dispositif de moulage utilisant une contre-pièce de géométrie connue.

La figure 2 est une coupe, selon II-II de la figure 1.

La figure 3 est homologue de la figure 1, pour une contre-pièce réalisée selon les enseignements de l'invention.

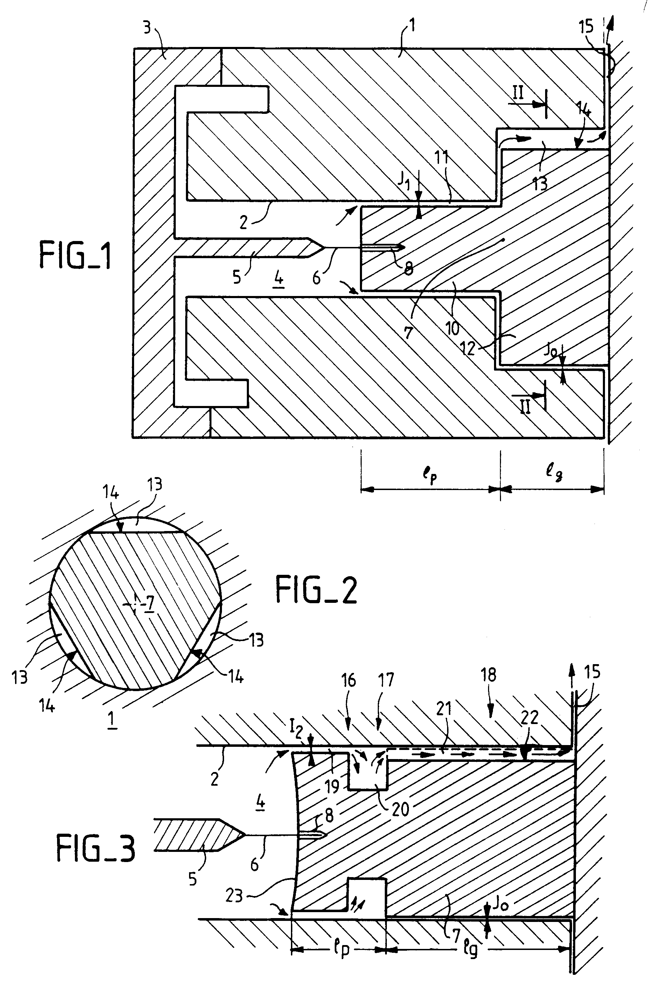

On va tout d'abord décrire un dispositif selon l'art antérieur, en référence aux figures 1 et 2.

Sur ces figures, la référence 1 désigne le corps de moule, qui comporte un alésage central 2 ou 〈〈canon de précision〉〉 et qui est fermé par un élément 3 formant empreinte inférieure. Les moyens d'injection de la matière plastique, de refroidissement du moule, de commande d'ouverture de celui-ci, etc., sont des moyens connus et pour cette raison n'ont pas été représentés.

Cet ensemble définit une cavité de moulage 4 à l'intérieur de laquelle est disposée une broche 5, solidaire du couvercle 3 et portant à son extrémité libre une aiguille calibrée 6 de 126 µm de diamètre.

Le diamètre intérieur de l'alésage 2 définira le diamètre extérieur de la virole à mouler (2500 µm), et le diamètre de l'aiguille calibrée 6 définira le diamètre intérieur de l'alésage de cette même virole (126 µm).

Pour maintenir précisément en place l'aiguille 6 pendant le moulage, c'est-à-dire pour assurer la concentricité entre cette aiguille et l'alésage 2, on prévoit une contre-pièce 7 insérée dans le canon de précision et comportant un alésage 8 de diamètre 127 µm recevant l'aiguille calibrée 6. La broche 5, solidaire de l'empreinte inférieure 3, se déplace avec celle-ci lors de la fermeture du moule (course de 200 mm environ), ce qui introduit l'aiguille dans la contre-pièce 7, et inversement à l'ouverture du moule, lors du démoulage de la virole.

La contre-pièce 7 comporte une partie antérieure 10, insérée dans le canon de moulage 2 avec un jeu J₁ laissant subsister un interstice 11 permettant le passage des gaz refoulés lors de l'injection de la matière plastique dans la cavité 4. La partie postérieure 12, quant à elle, est logée dans une cavité homologue avec un jeu J₀ le plus faible possible, de préférence nul, afin de permettre un guidage de précision de la contre-pièce 7. Pour permettre l'échappement des gaz refoulés par l'interstice 11, cette partie postérieure 12 comporte, comme on peut notamment le voir figure 2, un certain nombre de passages 13 constitués par des méplats 14 formés sur la pièce de manière à conserver la précision de guidage tout en laissant subsister un passage pour les gaz, par exemple trois méplats disposés à 120° les uns des autres. Ces gaz sont évacués par le plan de joint 15 de la partie postérieure du moule (le trajet des gaz refoulés est illustré par les flèches de la figure 1).Comme on peut le constater, cette configuration connue, si elle résout le problème de l'éventage, ne procure pas un guidage très précis de la contre-pièce 7 par rapport à l'aiguille 6 et ne permet donc pas d'obtenir une bonne concentricité entre cette aiguille 6 et le canon de moulage 2 : en effet, d'une part la longueur de guidage l_{g} relativement faible par rapport à la longueur en porte-à-faux (non guidée) lₚ relativement importante, d'autre part les deux diamètres d'alésage du canon 2 et les deux diamètres de la contre-pièce 7 conduisent à une chaîne de cotes complexe entre l'aiguille 6 et l'alésage 8, qui cumule les diverses incertitudes dimensionnelles. Pour pallier cet inconvénient, l'invention propose une nouvelle structure de contre-pièce, illustrée schématiquement figure 3.

La contre-pièce 7 de l'invention est constituée d'un élément cylindrique de révolution entièrement introduit dans le canon de précision 2 et comportant trois régions successives 16, 17, 18. La pièce 7 peut avantageusement être réalisée en un matériau céramique usiné.La région 16, disposée en vis-à-vis de la broche 5 et de l'aiguille 6, est une région cylindrique courte présentant avec l'alésage 2 un jeu J₂ de quelques micromètres, de manière à former un évent circulaire homogène 19, en communication avec la cavité 4. La seconde région 17 comporte, avantageusement, une gorge cylindrique 20 servant de chambre de tranquillisation.La troisième région 18 est formée une région cylindrique longue, dont le diamètre nominal procure avec le canon un un ajustement à serrage minimal, sans jeu et sans déformation, par exemple avec un diamètre extérieur de contre-pièce défini à {+1 µm, 0} pour un diamètre nominal de l'alésage 2 de 2500 µm défini à {0, -1 µm}. Cette région 18 de la contre-pièce comporte en outre des évents ponctuels 21 formés par des méplats 22 du même type que ceux décrits précédemment à propos de la figure 2, et permettant l'échappement des gaz de la chambre de tranquillisation 20 vers les plans de joint du moule.

On peut constater ainsi qu'à chaque région de la pièce 7 est dévolu un rôle particulier, joué de façon optimale :
- la région 16 assure le rôle d'éventage, en formant un évent de faible épaisseur (pour ne pas laisser passer la matière) et de faible longueur (pour ne pas perturber le guidage) et dont la circularité assure l'homogénéité de l'évacuation des gaz et donc l'absence de perturbation apportée au remplissage de la cavité par la matière plastique ;
- la région 17, grâce à sa gorge 20, sert de chambre de tranquillisation et permet d'assurer la transition entre l'évent continu 19 et les évents ponctuels 21 en réduisant la pression d'évacuation des gaz, en en régularisant l'écoulement, et en neutralisant ainsi les effets des hétérogénéités d'échappement des évents ponctuels (on notera à cet égard que les dimensions de la gorge 20 sont relativement peu critiques) ;
- la région 18, enfin, assure le rôle de guidage, avec une longueur en porte-à-faux minimale (le rapport lp/lg entre longueur non guidée et longueur guidée est très inférieur à celui de la configuration connue, comme on peut le voir en comparant les figures 1 et 3), et avec une chaîne de cotes minimale du fait que la pièce 7 est directement introduite dans le canon de moulage 2.

En pratique, on obtient ainsi entre la broche 5 et l'aiguille 6 d'une part, et l'alésage 8 de la contre-pièce 7 d'autre part, un jeu de 0,5 µm, parfaitement compatible avec la tolérance de concentricité requise de 0,7 µm, sans nuire aucunement à une bonne évacuation des gaz. En outre, la contre-pièce 7 peut assurer, outre ses fonctions d'éventage et de guidage, une troisième fonction de gabarit, en utilisant la forme de la face frontale 23 pour donner à la virole une forme particulière, brute de moulage, qui peut être une forme convexe, plane, plane à angles abattus, inclinée, etc. en fonction des performances optiques recherchées (on sait que la forme de la face avant influe sur celles-ci), et du connecteur devant recevoir la virole.

## Revendications

1. Un dispositif de moulage de viroles en matière plastique pour connecteurs de fibres optiques, comportant :
- une empreinte formant cavité de moule (4), comprenant un canon de moulage (2) cylindrique calibré définissant le diamètre extérieur de la virole à mouler, et une empreinte inférieure (3) fermant cette cavité de moule,
- une broche (5), reliée à cette empreinte inférieure, s'étendant axialement dans la cavité et prolongée à son extrémité libre par une aiguille calibrée (6) définissant le diamètre intérieur de la virole à mouler,
- une contre-pièce (7), s'étendant axialement dans la cavité en vis-à-vis de la broche, cette contre-pièce comportant un alésage (8) de guidage de l'aiguille recevant l'extrémité de celle-ci, de manière à assurer alors la concentricité entre aiguille et canon, et
- des moyens d'éventage, permettant l'échappement des gaz présents dans la cavité de moule vers l'extérieur lors de l'injection de la matière plastique,
caractérisé en ce que les moyens d'éventage sont formés par une pluralité de régions (16, 18) de la contre-pièce se succédant en direction axiale, comprenant :
- une région cylindrique courte (16) d'éventage, dont le diamètre laisse subsister entre contre-pièce et canon un jeu (J₂) formant évent périphérique continu (19) en communication avec la cavité de moulage, et
- une région cylindrique longue (18) de guidage, dont le diamètre nominal procure avec le canon un ajustement sans jeu présentant un serrage minimal, cette pièce étant pourvue d'évents longitudinaux discrets (21) s'étendant le long de génératrices de cette région cylindrique longue.

2. Dispositif selon la revendication 1, caractérisé en ce qu'il comporte en outre une gorge (17), formant chambre de tranquillisation (20), située entre la région cylindrique courte (16) d'éventage et la région cylindrique longue (18) de guidage.

## Claims

1. An apparatus for moulding plastic ferrules for optical fibre connectors, comprising:
- a mould forming a mould cavity (4), including a cylindrical calibrated moulding barrel (2) defining the external diameter of the ferrule to be moulded, and a lower mould (3) closing off this mould cavity,
- a pin (5), connected to this lower mould, extending axially into the cavity and prolonged at its free end by a calibrated needle (6) defining the internal diameter of the ferrule to be moulded,
- a counter-piece (7), extending axially into the cavity opposite the pin, this counter-piece comprising a bore (8) for guiding the needle and receiving the end thereof, so as to ensure that the needle and barrel are concentric to one another, and
- vent means, enabling the gases present in the mould cavity to escape outwards when the plastic material is injected, characterized in that the vent means are formed by a plurality of regions (16, 18) of the counter-piece disposed successively axially, including:
- a short cylindrical vent region (16), the diameter of which leaves, between the counter-piece and the barrel, a gap (J2) forming a continuous peripheral vent (19) communicating with the moulding cavity, and
- a long cylindrical guiding region (18), the nominal diameter of which, with the barrel, produces a fit with no gap offering minimal tightness, this part having inset longitudinal vents (21) extending the length of generators in this long cylindrical region.

2. An apparatus as claimed in Claim 1, characterized in that it further comprises a groove (17), forming a settling chamber (20), located between the short cylindrical vent region (16) and the long cylindrical guiding region (18).

## Patentansprüche

1. Vorrichtung zum Formen von Ringen oder Mänteln aus Kunststoffmaterial für Verbinder von optischen Fasern, mit:
- einer Abformung, die eine Formvertiefung (4) bildet, mit einer zylindrischen kalibrierten Formkanone (2), die den Außendurchmesser des zu formenden Rings definiert, und einer unteren Abformung (3), die diesen Formhohlraum schließt.
- einem Dorn (5), der mit dieser unteren Abformung verbunden ist, wobei er sich axial in den Hohlraum erstreckt und an seinem freien Ende durch eine kalibrierte Nadel (6) verlängert ist, die den Innendurchmesser des zu bildenden Rings definiert,
- einem Gegenstück (7), das sich axial in den Hohlraum gegenüber dem Dorn erstreckt, wobei dieses Gegenstück eine Ausnehmung (8) zur Führung der Nadel aufweist, die das Ende von dieser aufnimmt, derart, daß es die Konzentrizität zwischen der Nadel und der Kanone sicherstellt, und
- Abzugs- oder Lüftungseinrichtungen, die das Ausweichen der Gase, die in dem Formhohlraum vorhanden sind, nach außen beim Einspritzen des Kunststoffmaterials ermöglichen,
- dadurch gekennzeichnet, daß die Lüftungseinrichtungen aus einer Mehrzahl von Gebieten oder Bereichen (16, 18) des Gegenteils gebildet sind, die in axialer Richtung einander folgen, mit:
- einem kurzen zylindrischen Lüftungsbereich (16), dessen Durchmesser zwischen dem Gegenstück und der Kanone ein Spiel (J₂) übrig läßt, das einen kontinuierlichen Umfangsschlitz (19) in Verbindung mit dem Formhohlraum bildet und
- einem langen zylindrischen Führungsbereich (18), dessen nominaler Durchmesser mit der Kanone eine Einstellung ohne Spiel mit einem minimalen Einklemmen hervorruft, wobei dieses Teil mit diskreten Längslüftungsschlitzen (21) versehen ist, die sich entlang von Erzeugenden dieses langen zylindrischen Bereichs erstrecken.

2. Vorrichtung nach Ansbruch 1, dadurch gekennzeichnet, daß sie darüber hinaus eine Nut (17) aufweist, die eine Beruhigungskammer (20) bildet, wobei sie zwischen den kurzen zylindrischen Lüftungsbereichen (16) und dem langen zylindrischen Führungsbereich (18) angeordnet ist.
